# EUROPÄISCHE PATENTSCHRIFT

(11) **EP 2 269 125 B1**
(45) Veröffentlichungstag und Bekanntmachung des Hinweises auf die Patenterteilung: **17.10.2012**
(21) Anmeldenummer: 09718173.9
(22) Anmeldetag: 06.03.2009
(51) Int. Cl.: G05B 19/05, G05B 19/418

(54) **STEUERUNG MIT FLEXIBLER KOMMUNIKATIONS- UND STEUERUNGSSTRUKTUR UND VERFAHREN ZU DEREN KONFIGURATION**
CONTROL SYSTEM WITH FLEXIBLE COMMUNICATION AND CONTROL STRUCTURE AND METHOD FOR CONFIGURATION THEREOF
COMMANDE PRÉSENTANT UNE STRUCTURE DE COMMUNICATION ET DE COMMANDE FLEXIBLE, ET PROCÉDÉ POUR SA CONFIGURATION

(30) Priorität: 06.03.2008 DE 102008013075
(43) Veröffentlichungstag der Anmeldung: 05.01.2011
(73) Patentinhaber: Hilscher Gesellschaft für Systemautomation mbH, 65795 Hattersheim (DE)
(72) Erfinder: HILSCHER, Hans Jürgen, 65795 Hattersheim (DE)
(74) Vertreter: Dreykorn-Lindner, Werner
(86) Internationale Anmeldenummer: PCT/EP2009/001667
(87) Internationale Veröffentlichungsnummer: WO 2009/109403

(56) Entgegenhaltungen:
- EP-A1- 1 811 351
- DE-A1- 10 146 864
- DE-A1- 19 935 512
- DE-A1-102005 044 733
- DE-A1-102006 019 451

## Beschreibung

Die Erfindung betrifft eine Steuerung mit flexibler Kommunikations- und Steuerungsstruktur, und weiterhin ein Verfahren zu deren Konfiguration gemäß den Patentansprüchen 1 und 5.

PC basierte Steuerungstechnik hat einen wachsenden Anteil am Steuerungsmarkt. Getrieben durch die Wachstumsraten und Kostendruck eines Massenmarktes, steht immer leitungsfähigere Hardware bei sinkenden Systemkosten zur Verfügung. Weitere Vorteil sind das große Softwareangebot und die offenen Systemschnittstellen durch Einsatz von Standardbetriebssystemen.

Die hohe Innovationsrate hat sich als größtes Problem beim Einsatz dieser Technologie in der Automatisierungstechnik erwiesen. Automatisierungssoftware und spezielle PC-Einbaukarten müssen über ihre oft zehnjährige Lebenszeit mehrfach an neue Softwareversion oder PC-Generation angepasst werden, was zu erheblichen Pflegekosten und Ersatzteilproblemen führt. Vorteilhaft ist es die Automatisierungskomponenten möglichst gekapselt und nur über Standardschnittstellen mit der PC-Technologie zu kombinieren, um so möglichst einfach einen Generationswechsel folgen zu können bzw. auf dem großen PC-Markt die jeweils optimale Lösung auswählen zu können.

In der Regel wird die Steuerungstechnik als reine Softwarelösung auf einem PC integriert oder als intelligente Steuerungsbaugruppe in den PC gesteckt.

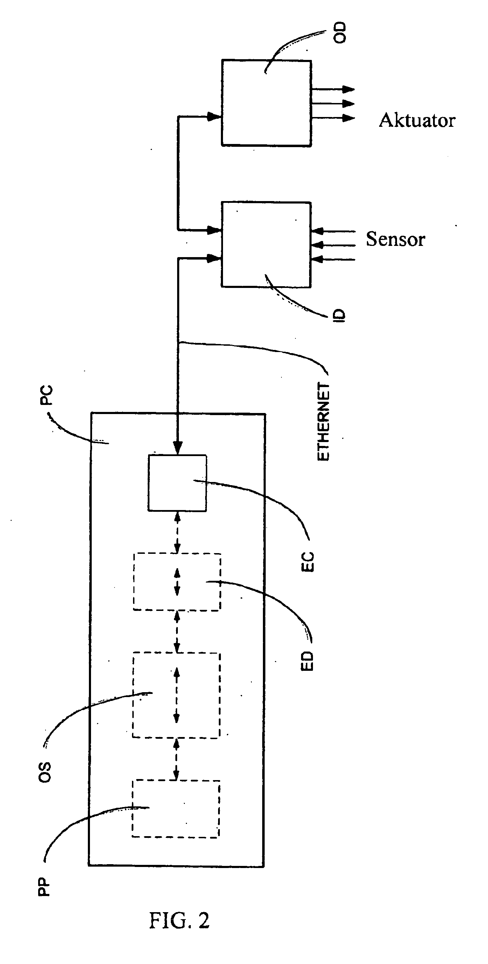

Bei der reine Softwarelösung, wie diese in FIG. 2 dargestellt ist, ist der PC (Datenverarbeitungseinheit) mit seinem Pentium Prozessor der Steuerungscontroller und führt ein Steuerungsprogramm PP unter einem Standardbetriebssystem OS direkt aus. Die zu verarbeitenden Anlagendaten werden über einen Ethernet-Treiber ED und einem Ethernet Controller EC seriell über Ethernet mit den Geräten, beispielsweise den Eingabeeinheiten ID bzw. Ausgabeeinheiten OD ausgetauscht. Diese sind für das Einlesen der Sensorsignale bzw. das Ausgeben an die Aktuatoren verantwortlich.

Der Vorteil besteht in den geringen Zusatzkosten eines Softwareprogramms. Dem gegenüber stehen die Nachteilen der wesentlich geringeren Zuverlässigkeit, Beeinflussung des Steuerungsprogramms durch andere PC-Programme, keine Möglichkeit für die Speicherung von Prozessdaten bei plötzlichem Spannungsausfall und einer hohen Abhängigkeit von der PC Generation.

Beispielsweise ist aus der DE 102 42 667 B4 ein echtzeitfähiges Steuerungssystem mit einer SPS-Applikation unter einem nicht echtzeitfähigen Betriebssystem bekannt. Damit die volle Funktionalität des nicht echtzeitfähigen Betriebssystems erhalten bleibt, enthält eine SPS-Applikation dabei alle notwendigen Funktionen, welche zum Ablauf eines anwendungsspezifischen Steuerungsprogramms notwendig sind. Diese sind beispielsweise ein Compiler, Interpreter oder Programmier- oder Befehlseingabewerkzeuge. In der Regel ist die SPS-Applikation ist eine unter der Kontrolle eines nicht echtzeitfähigen Betriebssystems, beispielsweise das allgemein bekannte Windows NT, 95, 98, 2000, CE, XP der Firma Microsoft, ablaufende Software. Die vorbestimmten Zeitabstände für die Ausgabe der Ausgabedaten werden mit einer zusätzlich in den PC eingesteckten Feldbus-Anschaltkarte bzw. Feldbus-Anschaltbaugruppe und über den Feldbus angeschlossene Feldbus-Module realisiert. Der Zeitpunkt für den Beginn der SPS-Applikation zur Berechnung der Ausgabedaten ist aufgrund der nicht Echtzeitfähigkeit des Betriebssystems nicht vorbestimmbar, es ist jedoch sichergestellt, dass innerhalb der vorbestimmten Zeitabstände die SPS-Applikation einmal Ausgangsdaten berechnet hat und an die Feldbus-Anschaltbaugruppe übergeben hat. Die Eingangsdaten, welche beispielsweise Zustände von Sensoren oder Endschaltern repräsentieren, werden von der Feldbus-Anschaltbaugruppe ebenfalls in den vorbestimmten Zeitabständen eingelesen und stehen der SPS-Applikation zur Berechnung der Ausgangsdaten zur Verfügung. Die Daten von den Sensoren oder Endschaltern zu der Feldbus-Anschaltbaugruppe werden über denselben Feldbus, beispielsweise Interbus, übertragen, wobei die Sensoren oder Endschalter jeweils ein Feldbus-Modul enthalten oder über ein Feldbus-Modul die Eingangsdaten bereitstellen. Über ein im Computer standardmäßig vorhandene Host-Interface, beispielsweise ein PCI-Interface, ist eine Feldbus-Anschaltbaugruppe mit dem Computer-Kern verbunden. Die Feldbus-Anschaltbaugruppe beinhaltet die Steuerung des Feldbusses, wobei diese Steuerung des Feldbusses von der SPS-Applikation parametriert wird. Die Feldbus-Anschaltbaugruppe stellt dem Host-Interface die Eingangsdaten von den Feldbus-Modulen zur Verfügung, während sie die Ausgangsdaten für die Feldbus-Module über das Host-Interface erhält. Die Bereitstellung der Echtzeitfähigkeit erfolgt in der Feldbus-Anschaltbaugruppe, dabei erfolgt die Steuerung des Feldbusses, unter Echtzeitbedingungen. Durch die konstante vorhersehbare Zykluszeit für den Feldbus erfüllen die Ausgangsdaten und Eingangsdaten ebenfalls die Echtzeitbedingungen.

Um die hohen Sicherheitsanforderungen einer speicherprogrammierbaren Steuerung zu erfüllen, sind auch Sicherheitsvorrichtungen für eine speicherprogrammierbare Steuerung bekannt. Beispielsweise ist aus der EP 0 977 100 A1 eine Sicherheitsvorrichtung für eine speichelprogrammierbare Steuerung bekannt, welche einen Controller aufweist, der Daten mit einer speicherprogrammierbaren Steuerung und über einen Buscontroller und ein Bussystem mit der zu steuernden Peripherie austauscht. Sie zeichnet sich dadurch aus, dass ein Speicher vorgesehen ist, in dem sicherheitsrelevante Daten der speicherprogrammierbaren Steuerung abgelegt sind, auf die der Controller Zugriff hat. In diesem, vorzugsweise nichtflüchtigen Speicher werden für den Hochlauf der speicherprogrammierbaren Steuerung notwendige Daten wie beispielsweise remanente Merker und wichtige Datenbausteine abgelegt. Diese zusätzliche Abspeicherung ermöglicht bei einer Fehlfunktion des die speicherprogrammierbare Steuerung übernehmenden Personal-Computers einen raschen Anlauf der speicherprogrammierbaren Steuerung. Ein herkömmlicher Personal-Computer kann mit der erfindungsgemäßen Hardwarekonfiguration leicht in Form einer entsprechenden Steckkarte nachgerüstet werden. Bei einer anderen Ausgestaltung ist neben dem Controller, der Daten mit einer speicherprogrammierbaren Steuerung und über ein Bussystem mit der zu steuernden Peripherie austauscht, eine Überwachung vorgesehen. Diese überwacht ein von der speicherprogrammierbaren Steuerung erzeugtes und ihr von dem Controller zugeführtes Betriebsbereitschaftssignal. In Abhängigkeit von der Überwachung ist ein Kontaktgeber angesteuert, der ein Ausgangssignal bereitstellt, das die Funktionsfähigkeit der speicherprogrammierbaren Steuerung anzeigt. Bleibt beispielsweise für eine vordefinierte Zeitspanne das Betriebsbereitschaftssignal in der als gültig erkannten Weise aus, ändert der Kontaktgeber sein Ausgangssignal, so dass dem Benutzer angezeigt wird, dass sich die speicherprogrammierbare Steuerung in einem nicht ordnungsgemäßen Zustand befindet. Mithilfe des Ausgangssignals des Kontaktgebers ist es dem Benutzer möglich, geeignete Gegenmaßnahmen oder Warnfunktionen zu aktivieren. Das Ausgangssignal ist durch einen potentialfreien Kontakt realisiert. Eine weitere Weiterbildung sieht vor, dass die Überwachung in Abhängigkeit von dem Betriebsbereitschaftssignal einen das Bussystem steuernden Buscontroller ansteuert. Lässt das Betriebsbereitschaftssignal der speicherprogammierbaren Steuerung den Schluss zu, dass bei der speicherprogrammierbaren Steuerung eine Fehlfunktion aufgetreten ist, steuert die Überwachung den Buscontroller in der Weise an, dass dieser mit einem Sicherheitszustand korrespondierende Ansteuersignale an die Peripherie sendet. Eine weitere Ausgestaltung sieht neben dem Controller, der Daten mit einer speicherprogrammierbaren Steuerung und über ein Bussystem mit der zu steuernden Peripherie austauscht, eine zusätzliche Schnittstelle vor. Dieser Schnittstelle ist zumindest ein Bediensignal zugeführt, das über den Controller an die speicherprogrammierbare Steuerung weitergeleitet wird. Der Benutzer kann direkt auf die speicherprogrammierbare Steuerung, beispielsweise durch Stop-, Aktivier- oder Startbefehle, auch dann zuzugreifen, wenn ein nicht echtzeitfähiges Betriebssystem, das normalerweise den Datenaustausch zwischen Anwender und speicherprogrammierbarer Steuerung sicherstellt, außer Betrieb ist. In einer anderen Ausführung ist neben dem Controller, der Daten mit einer speicherprogrammierbaren Steuerung und über ein Bussystem mit der zu steuernden Peripherie austauscht, eine Echtzeitsteuerung vorgesehen. Die Echtzeitsteuerung gibt ein Steuersignal auf ein Bussystem eines Personal-Computers, wobei das Bussystem des Personal-Computers den Datenaustausch zwischen Controller und speicherprogrammierbarer Steuerung ermöglicht. Bei dieser Echtzeitsteuerung kann es sich um eine Ausführungsform, wie im Stand der Technik beschrieben, handeln. Das Steuersignal stellt die Echtzeitfähigkeit eines Prozessors sicher, auf dem ein nichtechtzeitfähiges und ein echtzeitfähiges Betriebssystem lauffähig gemacht wurden. Erst diese Echtzeitsteuerung stellt den Parallelbetrieb der beiden Betriebssysteme sicher.

Weiterhin ist aus dem DE 91 12 306.2 U1 ein Personalrechner bekannt, welcher zusammen mit peripheren Einheiten von speicherprogrammierbaren Automatisierungsgeräten auch die Aufgaben von bekannten Automatisierungsgeräten wahrnimmt, wobei auf eine Vernetzung von Personalrechner und Automatisierungsgerät verzichtet wird. Hierzu weist der Personalrechner eine Systemeinheit zur Aufnahme einer Prozessorbaugruppe und Floppy-Disk- und Festplattenlaufwerken sowie mit Steckplätzen zur Aufnahme von steckbaren Funktionseinheiten, die über einen Systembus mit der Prozessorbaugruppe verbunden sind auf. Die Prozessorbaugruppe braucht nicht unbedingt als "Slot-CPU" ausgebildet sein; es ist auch möglich, diese als sogenanntes "Motherboard" mit Steckplätzen zur Aufnahme weiterer Baugruppen auszubilden. Auch ist es möglich, diese Prozessorbaugruppe PB mit einem Co-Prozessor, mit einer gepufferten Hardware-Uhr oder sonstigen Teilen einer Prozessorbaugruppe, wie seriellen oder parallelen Schnittstellen, zu versehen. Mindestens eine Funktionseinheit ist als CPU-Baugruppe eines Zentralgerätes eines speicherprogrammierbaren Automatisierungsgerätes ausgebildet, die mit einer ersten Schnittstelle mit dem Systembus des Personalrechners verbunden ist und mit einer zweiten Schnittstelle zur Ankopplung an periphere Einheiten des speicherprogrammierbaren Automatisierungsgerätes versehen ist. Die zweite Schnittstelle weist eine auf der CPU-Baugruppe angeordnete Steckerleiste und ein auf diese steckbares Peripherie-Modul zum Ansteuern der peripheren Einheiten auf. Schließlich kann die CPU-Baugruppe eine weitere Schnittstelle zum Anschluss einer Überwachungs- und Anzeigeeinheit aufweisen, die bewirkt, dass die Speicherinhalte der Speicher der CPU-Baugruppe bei einem Ausfall der Stromversorgung gepuffert werden, und die anzeigt, ob die CPU-Baugruppe in oder außer Betrieb ist.

Weiterhin ist aus der DE 33 33 807 A1 ein speicherprogrammierbares Automatisierungsgerät unter Verwendung von Zentraleinheiten auf Mehrprozessorbasis bekannt. Um eine Zusammenfassung mehrerer Zentraleinheiten ein Automatisierungsgerät zu schaffen, bei dem das Zusammenwirken der einzelnen Zentraleinheiten vom Verkehr der Zentraleinheiten mit der Peripherie getrennt ist und durch das sich Anforderungen an Redundanz und Sicherheit relativ leicht erfüllen lassen, haben die in ein gemeinsames Gehäuse einsteckbaren Zentraleinheiten neben ihrer Schnittstelle zu ihrem externen Bussystem eine weitere Schnittstelle zum Anschluss an ein zusätzliches getrenntes Bussystem im Gerät. Dieses zusätzliche Bussystem dient zur gemeinsamen Stromversorgung und zum von einem Koordinierungsprozessor gesteuerten Datenverkehr der Zentraleinheiten untereinander. Durch diese vorgenannte Trennung der Bussysteme wird erreicht, dass der Peripheriebus nicht mit zusätzlichen Kommunikationsvorgängen belastet wird, so dass man hierdurch optimale Bearbeitungsgeschwindigkeiten erreichen kann. Umgekehrt kann der Kommunikationsbus, da er völlig von der Peripherie entkoppelt ist, völlig neu und unabhängig konzipiert werden und dadurch optimal den Anforderungen von Kommunikation und Stromversorgung angepasst sein. So können z.B. zwei Stromversorgungen gekoppelt werden für Reservebetrieb; ferner ist auch die Buskopplung mehrerer Systeme sehr einfach realisierbar, da immer der Kommunikationsspeicher in der Zentraleinheit für den Datenaustausch zur Verfügung steht und über spezielle Interruptleitungen gezielt jede Zentraleinheit angesprochen werden kann.

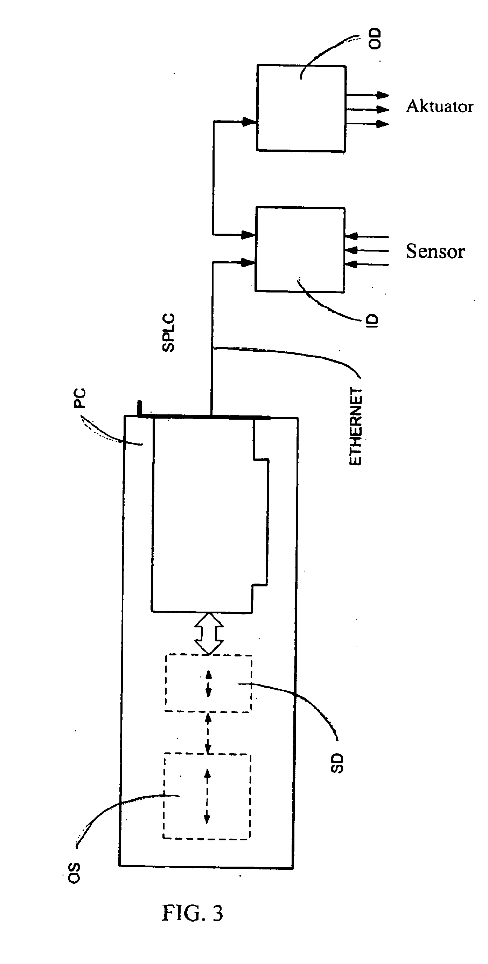

Bei der intelligenten Steuerungsbaugruppe in Form einer Einsteckkarte SLPC, wie diese in FIG. 3 dargestellt ist (oft als Slot-SPS bezeichnet), verfügt die Einsteckkarte SLPC über einen eigenen Mirkoprozessor, der das Steuerungsprogramm ausführt. Auf dieser ist spezielle Hardware wie ein Batterie gepufferter Datenspeicher, externe Spannungsversorgung für einen Betrieb an einer Notstromversorgung oder weitere Kommunikationsschnittstellen für verschiedene Feldbussysteme vorhanden (in FIG. 3 nicht dargestellt). Die Einsteckkarte SLPC wird an einen PC internen Systembus PB angekoppelt und über einen speziellen Treiber SD mit einem Betriebssystem OS verbunden. Über diese Schnittstellen tauschen andere PC-Applikationen die Daten mit der Slot-SPS SLPC aus.

Der Vorteil fehlende Hardwarekomponenten über eine zusätzliche Steckbaugruppe nachzurüsten erzeugt hohe Kosten und wird mit dem Wechsel von der Feldbustechnik hin zur Kommunikation über Ethernet zunehmend unattraktiv. Diese ist auf den PCs vorhanden, während Feldbuskommunikation sowieso eine zusätzliche Steckbaugruppe benötigte.

Beispielsweise ist aus der DE 295 14 502 U1 eine Steckkarte für einen Rechner bekannt, mittels derer Peripheriebaugruppen und damit auch ein technischer Prozeß an den Rechner anschließbar sind, wobei dennoch eine Entkopplung des Rechners von der Kontrolle des technischen Prozesses gewährleistet ist. Hierzu ist auf der Steckkarte eine Zentraleinheit einer modular aufgebauten speicherprogrammierbaren Steuerung angeordnet und die Zentraleinheit weist eine mit den Steckanschlusskontakten verbundene Programmierschnittsteile und mindestens eine Peripherieschnittstelle zum Anschließen von Peripherieeinheiten an die Zentraleinheit auf. Es wird also eine vollständige, vom Rechner unabhängige Zentraleinheit auf der Steckkarte angeordnet, so dass der Rechner selbst keine Steuerungsaufgaben mehr übernimmt. Die Abarbeitung des Steuerungsprogramms ist daher völlig unabhängig von dem Funktionieren des Rechners. Die Unabhängigkeit der Kontrolle des technischen Prozesses wird noch weiter vervollständigt, wenn die Steckkarte eine eigene, von der Stromversorgung des Rechners unabhängige Stromversorgung für die Zentraleinheit aufweist. Wenn die Programmierschnittstelle als busfähige Schnittstelle ausgebildet ist und mit einem nach außen geführten Steckanschluss verbunden ist, ist nicht nur eine Kommunikation zwischen der Zentraleinheit und dem Rechner, sondern auch mit anderen an den Steckanschluss angeschlossenen Komponenten möglich. Insbesondere ist möglich, dass der Rechner und/oder die Zentraleinheit mit anderen Zentraleinheiten kommunizieren. Wenn zwischen den Steckanschlusskontakten zum Rechner einerseits und der Programmierschnittstelle und dem nach außen geführten Steckanschluss andererseits eine Schnittstellenschaltung angeordnet ist, wird der Rechner von Kommunikationsaufgaben entlastet. Darüber hinaus ist es möglich, die Schnittstellenschaltung als festverdrahtete Schaltung auszuführen. Hierdurch wird gegenüber einer Software-Lösung ein erheblicher Geschwindigkeitsvorteil erzielt. Wenn die Programmierschnittstelle als Schnittstelle zur Übertragung von Differenzsignalen ausgebildet ist, ist die Signalübertragung besonders störungsfest. Dies ist insbesondere von Vorteil, wenn die Programmierschnittstelle als busfähige Schnittstelle ausgebildet ist und mit einem nach außen geführten Steckanschluss verbunden ist.

Weiterhin ist aus der DE 38 08 135 A1 ein speicherprogrammierbares Steuerungssystem als integraler Bestandteil eines Personal-Computers, bestehend aus den Einzelkomponenten, Mikrocontroller oder Mikroprozessor, Datenspeicher, freiprogrammierbarer Speicherbereich für das Anwenderprogramm und den Interfaceelementen, bekannt, wobei alle Komponenten mit einem Bussystem untereinander verbunden sind. Dabei befindet sich die SPS-Einheit auf einer Steckbaugruppe und ist integraler Bestandteil des Personal-Computers, indem die Steckbaugruppe direkt auf den PC-BUS aufgesteckt ist. Die SPS-Einheit tauscht mittels eines Koppelinterfaces mit dem Prozessor des Personal-Computers über den PC-BUS in serieller oder paralleler Form Status, Daten und Programme aus und stellt völlig unabhängig von dem Prozessor des Personal-Computers ein autarkes speicherprogrammierbares Steuerungssystem dar. Hierzu liest die SPS-Einheit mittels einer sich selbst verwaltenden Interfaceeinheit Daten und Informationen der dezentral an den Feldbus gekoppelten Eingangs- Ausgangseinheiten, verarbeitet diese entsprechend des im freiprogrammierbaren Speicherbereich abgelegten Anwenderprogramms und sendet seine Steuerbefehle an die dezentral, an den Feldbus angekoppelten Eingangs-Ausgangseinheiten über die Interfaceeinheit. Die Interfaceeinheit besteht aus dem Dual-Port-Ram, dem Mikrocontroller, dem Datenspeicher, dem Speicher für das Betriebssystemprogramm des Interfaces und einem Interfacemodul, zur Ankopplung an den Feldbus. Dabei ist die Steckbaugruppe so ausgeführt, dass die Bauteilebestückung variabel ist, und dadurch die Funktion zum einen als intelligentes Interface mit autarker SPS-Einheit und zum anderen als reine intelligente Interfaceschaltung aktiviert ist. Im einzelnen ist entweder das Dual-Port-Ram oder das Dual-Port-Ram als Bestückung vorgesehen und die Arbitrationsschaltung aktiviert über die Steuerleitung das Dual-Port-Ram. Die Steckbaugruppe fungiert als Interfaceeinheit zwischen Feldbusebene und PC-Ebene oder aktiviert über die Steuerleitung das Dual-Port-Ram. Damit fungiert die Steckbaugruppe als SPS-Einheit, die für den PC-Prozessor die Prozesssteuerung (nach dem im Programmspeicher individuell eingegebenen Anwenderprogramm und den von dem asynchron ablaufenden Interfacezyklus) der Interfaceeinheit und den von dem Dual-Port-Ram bereitgestellten Dateninformationen durchführt. Der Personal-Computer dient durch Wahl der PC-Software zum einen als Programmiergerät der SPS-Einheit, und zum anderen in der Prozessphase als Darstellungs - und Verwaltungseinheit, für die von der SPS-Einheit ausgeführten Prozesssteuerung. Durch wählbaren Adressvergleich der Arbitrationsschaltung können weitere Steckbaugruppen auf den PC-BUS gesteckt werden, wobei unterschiedliche Prozesse parallel ablaufen können und die Darstellung dieser Prozesse von dem Personal-Computer durchgeführt werden. Die dezentral angeordneten Eingangs-Ausgangseinheiten stellen sowohl eine direkte Eingangs-Ausgangsperipherie für die Prozesssteuerung dar, als auch können mit eigener Intelligenz eine Vorverarbeitung für die Prozeß-Steuerung durchführen. Schließlich kann die SPS-Einheit eine Prozessorkern aufweisen, der einen, für die Datenwortverarbeitung zuständigen Mikrocontroller, und einen, für schnelle Steuerungsaufgaben geeigneten Bitprozessor aufweist.

Weiterhin ist aus der EP 1 569 055 B1 ein steckbarer Kommunikations-Baustein sowie ein Verfahren zur Kommunikation mittels eines steckbaren Kommunikationsbausteins bekannt. Dabei werden die anwendungsunabhängige bzw. optionale Kommunikationsfunktionalität für Baugruppen in einem selbständigen, steckbaren Kommunikations-Baustein implementiert, anstatt auf der Baugruppe selbst, auf einer Rückwandbus-Baugruppe oder in einem abgesetzten Personal Computer (PC). Der Kommunikationsbaustein ist nicht dauerhaft fest mit einer Baugruppe verbunden. Gemäß einer Ausgestaltung ist zumindest eine der Softwarekomponenten zur Ausführung von Kommunikationsaufgaben mittels Internettechnologien vorgesehen, wodurch ein universell einsetzbarer, günstiger Kommunikations-Baustein zur Verfügung gestellt werden kann. Kommunikationsmittel zur Ausführung von Kommunikationsaufgaben mittels Internettechnologien müssen so in der Baugruppe nicht bereitgehalten werden, der Zugriff auf die Baugruppen über Internettechnologie ist optional trotzdem möglich. Der Kommunikations-Baustein benötigt keine Administration und für eine Vielzahl von Baugruppen, z. B. für alle speicherprogrammierbaren Steuerungen (PLC) einer Fabrik, für sämtliche Geräte in einem Haushalt ist nur ein einziger Kommunikations-Baustein notwendig, der bei Bedarf an die jeweilige Baugruppe angesteckt wird. Alle Software und Web-Kommunikationsfunktionalität kann auf den Kommunikations-Baustein ausgelagert werden und verursacht nur dort Kosten, nicht in der jeweiligen Baugruppe. Web-Funktionen sind jederzeit durch Anstecken eines Kommunikations-Bausteins einer Baugruppe hinzufügbar. Auch ganz einfache und kostengünstige Baugruppen können so optional mittels Internettechnologien gelesen und konfiguriert werden. Vorteilhafterweise ist eine der Softwarekomponenten ein Webserver oder zur Ausführung von Webservices vorgesehen. Weiterhin sind die Zugriffsmittel zum Zugriff auf einen Daten- und Adressbus der Baugruppen vorgesehen, d. h. der Kommunikations-Baustein liegt elektrisch so nahe an der jeweiligen Baugruppe, dass baugruppeninterne bzw. kostengünstigere Zugriffsschnittstellen nutzbar sind, insbesondere nicht-remotefähige Software-Schnittstellen. Eine universelle Verwendbarkeit des Kommunikations-Bausteins kann auch dadurch erreicht werden, dass die Zugriffsmittel zum Zugriff auf die Kommunikationsmittel der Baugruppen mittels eines generisch erweiterbaren, lokal nutzbaren Punkt-zu-Punkt-Zugriffsprotokolls vorgesehen sind. Ein solches standardisiertes, einfach und kostengünstig zu realisierendes, nicht-remotefähiges Zugriffsprotokoll ist für beliebige Baugruppen einsetzbar. Somit sind aufgrund der Universalität des Kommunikations-Bausteins trotz optionaler Verwendung potentiell hohe Stückzahlen erreichbar, wodurch die Stückkosten eines solchen steckbaren Kommunikations-Bausteins gesenkt würden. Die Integration von nachladbarer Anwendungssoftware wird ermöglicht, wenn Mittel zur Speicherung und Ausführung von Softwarekomponenten zum Laden von Softwarekomponenten vorgesehen sind. Insbesondere sind erste Anschlussmittel zur direkten elektrischen Kopplung mit Schnittstellen von Baugruppen industrieller Automatisierungssysteme vorgesehen bzw. die zweiten Anschlussmittel sind zur elektrischen Kopplung mit Schnittstellen von Mensch-Maschine-Schnittstellen-Komponenten für Engineering, Parametrierung und/oder Beobachtung der Baugruppen industrieller Automatisierungssysteme vorgesehen. Die Funktionalität der üblicherweise auf der jeweiligen Baugruppe zur Verfügung gestellten Engineering-, Diagnose-, Wartungs-Software kann bei Speicherung und Ausführung auf dem Kommunikations-Baustein wesentlich leistungsfähiger sein. Somit sind die neuesten, leistungsfähigsten und auch speicherintensive Software-Technologien nutzbar, weil sie den Kostenbeschränknngen durch die Baugruppen nicht unterliegen. Die Anbindung von Webbrowsern (z. B. HTTP Clients) an a priori nicht internetfähige Baugruppen für Engineering, Parametrierung und Beobachtung, insbesondere im Automatisierungsumfeld, wird ermöglicht. Durch die mechanische Ausführung des Kommunikations-Bausteins als Stecker oder fest in ein Kabel integriert, kann ein weiterer Kostenvorteil erzielt werden. Zudem wird die Handhabung eines solchen Kommunikations-Bausteins wesentlich erleichtert, da für die Kommunikation mit einer Baugruppe weder ein Eingriff in die jeweilige Baugruppe noch die Verwendung eines PC erforderlich ist.

Weiterhin ist aus der EP 1 554 839 A1 ein Verfahren, eine Schnittstelleneinheit und ein Knoten zur parallelen Nutzung eines Kommunikationsnetzwerkes für Echtzeitanwendungen und Nicht-Echtzeitanwendungen bekannt. Hierzu wird in einem Kommunikationsnetz mit mehreren Knoten, die über einen Kommunikationsweg miteinander verbunden sind, eine Datenübermittlung zyklisch und deterministisch ausgeführt, wobei Daten für Echtzeitanwendungen priorisiert behandelt werden, so dass in einem Übertragungszyklus zuerst alle Daten für Echtzeitanwendungen übergeben werden und in der Zeit, die bis zum nächsten Übermittlungszyklus verbleibt, dann die Daten für Nicht-Echtzeitanwendungen.

Das Datenübertragungsverfahren für ein lokales Kommunikationsnetz ermöglicht die parallele Nutzung des Kommünikationsnetzes für Echtzeitanwendungen und Nicht-Echtzeitanwendungen. Insbesondere wird gewährleistet, dass das Protokoll für lokale Kommunikationsnetze, das die Leitungsschicht im OSI-Modell darstellt, auch den hohen Anforderungen an die Echtzeitfähigkeit und Reaktionszeit für Maschinensteuerungsaufgaben genügt. Um die Kommunikationsanforderungen eines Echtzeit-Systems zu erfüllen, erfolgt die Datenübermittlung unter der vollständigen Kontrolle des Echtzeitsystems, wobei die Echtzeitdatenkommunikation gegenüber der sonstigen Datenkommunikation, z.B. zur Administrierung und Fehlerdiagnose, die vom Betriebssystem des Knotens initiiert wird, priorisiert ist. Alle Daten für Nicht-Echtzeitanwendungen werden nämlich grundsätzlich als nieder priorisiert behandelt und erst dann übermittelt, wenn die Datenübermittlung für Echtzeitdatenpakete bereits abgeschlossen ist. Mithilfe der Priorisierungstechnik für Echtzeitdaten bei gleichzeitiger Ausführung einer zyklischen und deterministischen Datenübermittlung wird dafür gesorgt, dass nicht echtzeitfähige Zugriffe grundsätzlich erst nach den echtzeitfähigen Zugriffen erfolgen und damit den Echtzeitdatenverkehr nicht behindern. Ein Sendevorgang wird so ausgeführt, dass bei einem Sendezyklus die Daten für Echtzeitanwendungen erst vollständig gesendet und dann die Zeit berechnet wird, die noch bis zum nächsten Sendezyklus verbleibt, um dann die verbleibende Zeit zur Datenübertragung für Nicht-Echtzeitanwendungen zu verwenden. Es wird so sichergestellt, dass Datenpakete aus dem Echtzeitsystem immer eine freie Sendeleitung vorfinden, wenn sie an der Reihe sind. Datenpakete für Nicht-Echtzeitanwendungen, z.B. des Betriebssystems, werden erst danach in den Lücken zwischen zwei Sendezyklen verschickt, wenn entsprechende Zeit verbleibt. Bevorzugt ist dabei, die Daten in Form von Datenpaketen so zu übermitteln, dass dann, wenn die nach dem Senden der Daten für Echtzeitanwendungen verbleibende Zeit die zum Versenden eines Datenpakets für Nicht-Echtzeitanwendungen benötigte Zeitdauer übersteigt, das entsprechende Datenpaket zwischengespeichert und bevorzugt mit dem nächsten Sendezyklus versandt wird. Diese Vorgehensweise ermöglicht eine einfache Prioritätssteuerung des Sendebetriebs von Echtzeitanwendungen und Nicht-Echtzeitanwendungen. Gemäß einer weiteren Ausführungsform werden bei einem Empfangsvorgang die in einem Empfangszyklus empfangenen Daten ausgewertet, um zu bestimmen, welche der empfangenen Daten Daten für Echtzeitanwendungen und welche der empfangenen Daten Daten für Nicht-Echtzeitanwendungen darstellen, wobei die empfangenen Daten für Echtzeitanwendungen im darauffolgenden Empfangszyklus bearbeitet werden. Diese Vorgehensweise ermöglicht es, auf einfache Weise alle echtzeitrelevanten Datenpakete herauszufiltern, ohne dass es darauf ankommt, wann bzw. in welcher Reihenfolge sie eintreffen. So wird sichergestellt, dass die echtzeitrelevanten Informationen komplett vor Beginn des nächsten Empfangs-Zyklus vollständig für die auszuführenden Echtzeitanwendungen bereit stehen. Die herausgefilterten empfangenen Daten für Nicht-Echtzeitanwendungen werden in einem von den Echtzeitanwendungen unabhängigen Vorgang bearbeitet. Die Übergabe der Datenpakete mit nicht echtzeitrelevanten Daten außerhalb des Echtzeit-Kontextes an das Betriebssystem des Knotens ermöglicht eine hohe Datenübertragungsrate bei gleichzeitiger einfacher Implementierung des Empfangsvorgangs. Ein paralleles Senden, Empfangen und Verarbeiten der Daten für Echtzeitanwendungen und der Daten für Nicht-Echtzeitanwendungen kann durchgeführt werden, wobei zum Verarbeiten der Daten in einem ersten Schritt die in einem vorangegangenen Empfangszyklus empfangenen Daten ausgewertet werden, in einem zweiten Schritt die Echtzeitanwendungen mit den ermittelten echtzeitrelevanten Daten ausführt werden und in einem dritten Schritt die zu sendenden Echtzeitdaten dann übergeben werden. Diese Vorgehensweise ermöglicht eine hohe Übertragungsleistung bei vollständiger Echtzeitfähigkeit und gewährleistet somit eine Kommunikationsanforderung für eine schnelle Maschinensteuerung. Bevorzugt ist dabei, den Sende- und Empfangszyklus im Full-Duplex-Betrieb so auszulegen, dass die Zyklusdauer fest ist, der Sendezyklus gegenüber dem Empfangszyklus jedoch um eine konstante Zeitspanne verzögert ist, die die Zeitdauer des ersten und zweiten Verarbeitungsschrittes, bei dem die Daten ausgewertet und die Echtzeitanwendungen durchgeführt werden, entspricht. Diese Vorgehensweise sorgt für einen einfachen und schnellen Full-Duplex-Betrieb mit reibungsloser Echtzeitkommunikation.

Weiterhin ist aus der DE 199 35 512 A1 eine Vorrichtung zur Verbindung einer industriellen Steuereinheit mit einem industriellen Bedienpanel bekannt, bei der das Bedienpanel über eine einzige Kommunikationsanbindung mit der industriellen Steuereinheit verbunden sein kann. Dabei weist das Bedienpanel mehrere Funktionseinheiten auf, wobei jeder dieser Funktionseinheiten ein eigener USB-Controller zugeordnet ist, mittels dessen eine Umsetzung der innerhalb der jeweiligen Funktionseinheit vorliegenden Daten in das USB-Format und umgekehrt, erfolgt. Die USB-Controller sind jeweils mit einem in das Bedienpanel integrierten USB-Hub verbunden, der die ihm von den Funktionseinheiten zugeführten Daten zusammen mit jeweils zugehörigen Adressinformationen an eine einzige Kommunikationsanbindung weitergibt. Schließlich weist das Bedienpanel auch eine USB-Frontschnittstelle auf, die mit einem externen weiteren Bedien- und/- oder Anzeigegerät oder einem externen Massenspeichergerät verbunden ist. Dabei können die am Markt verfügbaren Treiber der Microsoft-Windows-Betriebssysteme Anwendung finden.

Weiterhin ist aus der EP 1 291 745 A2 eine speicherprogrammierbare Steuerung mit einem in der Steuerung integriertem Funkmodul bekannt, bei welcher sowohl die Programmierung, Kommunikation und Prozesssteuerung über Funkverbindung erfolgt.

Aus der 101 46 864 A1 ist ein SPS-System mit Ethernet-Switch bekannt.

Schließlich ist aus der DE 10 2006 019 451 A1 der Anmelderin ein Gerät mit flexibler Kommunikations- und Steuerungsstruktur, welches zur Kopplung mit anderen Geräten oder einer übergeordneten Steuereinrichtung eines Automatisierungssystems über einen seriellen Datenbus aufweist:
➢ mindestens zwei Kommunikationsschnittstellen und
➢ mindestens eine Speicherprogrammierbare Steuerung,
so dass die Kombination aus Kommunikationsschnittstellen und speicherprogrammierbarer Steuerung als austauschbare Einheit ausgestaltet ist und die Daten unter Realisierung einer Bypass-Funktion transparent oder über die interne speicherprogrammierbare Steuerung weiterverarbeitet zwischen den Kommunikationsschnittstellen des Geräts übertragen werden. Die austauschbare Einheit kann als Stecker ausgestaltet werden, welcher auf eine Kommunikationsschnittstelle eines Geräts aufsteckbar ist. Das Gerät kann als Geräteanschlussstecker ausgestaltet werden, welcher über eine oder mehrere als Stecker ausgeprägte Kommunikationsschnittstellen verfügt und sowohl Kommunikations- als auch Steuerungsfunktionen ausführt. Das weiterhin in der DE 10 2006 019 451 A1 der Anmelderin beschriebene Verfahren zur Kopplung des Geräts, welches mindestens zwei Kommunikationsschnittstellen aufweist, mit der speicherprogrammierbaren Steuerung, ist dadurch gekennzeichnet, dass zur Kopplung mit untereinander oder einer übergeordneten Steuereinrichtung über einen seriellen Datenbus kommunizierenden Geräten eines Automatisierungssystems, die Kommunikationsschnittstellen um eine SPS-Funktion erweitert werden und dass diese Kombination in den Kommunikationspfad eingebunden ist und die Daten unter Realisierung einer Bypass-Funktion transparent oder über die interne speicherprogrammierbare Steuerung weiterverarbeitet zwischen den Kommunikationsschnittstellen des Geräts übertragen werden. Dabei ist die Kombination als austauschbare Einheit ausgestaltet, welche eine interne Steuerungsfunktion aufweist, die auf die Kommunikationsdaten so einwirkt, als wäre die Steuerungsfunktion in dem jeweils anderen Gerät oder der übergeordneten Steuereinrichtung realisiert.

Wie die vorstehende Würdigung des Standes der Technik aufzeigt, werden in der Automatisierungstechnik zur Kommunikation zwischen den einzelnen Geräten verschiedene Schnittstellen mit ihren physikalischen Eigenschaften und Übertragungsprotokolle definiert und in internationale Normen eingebracht oder etablieren sich als Industriestandards. Diese Systeme werden allgemein als Feldbussystem bezeichnet, wobei auch die Ethernet-basierten Technologien dazu zu zählen sind. Die Schnittstellen sind in Form von dedizierten Kommunikations-Controllern, zum Teil mit CPU als integrierte Schaltkreise (Kommunikations-Prozessor) aufgebaut. Die Anmelderin geht von der Überlegung aus, dass immer mehr Intelligenz auf dem Peripheriegerät implementiert wird, so dass dieses neben den eigentlichen Gerätefunktionen auch komplette, frei programmierbare Abläufe und lokale Ein - und Ausgaben selbständig ausführt. Damit wird faktisch die Funktion einer SPS in das Gerät implementiert, welches zur übergeordneten Einheit nur noch Steuer- und Statusinformationen austauscht. Dies erfolgt in der Regel über unterschiedliche serielle KommunikationsSchnittstellen basierend auf Feldbus- oder Ethernet-Standards. Dabei sind in der Regel spezielle Hard- und Softwarekomponenten mit einer Reihe von teueren, für die Kommunikation speziell ausgelegten Komponenten erforderlich. Beim Gegenstand der DE 10 2006 019 451 A1 der Anmelderin wird dieser Aufwand durch ein Gerät mit flexibler Kommunikations- und Steuerungsstruktur reduziert, bei dem die Wirkungskette: Gerätefunktion - Kommunikation - SPS - Kommunikation - übergeordnete Steuereinrichtung bzw. anderes Gerät realisiert ist. Dieses weist folgende Vorteile auf:
● die individuelle und sehr aufwendige Geräteintegration der SPS entfällt,
● die für die SPS-Funktionalitäten benötigte Rechenleistung wird separat zur Verfügung gestellt und spart den Wechsel des Geräteprozessors und damit in der Regel die komplette Neukonstruktion eines Peripheriegerätes sowie die damit verbundene Neuentwicklung der Firmware.

Insbesondere ermöglicht das beim Gegenstand der DE 10 2006 019 451 A1 der Anmelderin realisierte Integrationskonzept in vorhandene Peripheriegeräte somit den Aufbau von verteilten, intelligenten Steuerungsarchitekturen mit konventionellen Automatisierungsgeräten und durch die Verfügbarkeit einer lokalen Intelligenz direkt am Peripheriegerät die Realisierung einer Bypass-Funktion. Dabei kann dieses flexibel, effizient und komfortabel ausgestaltet werden, wobei der Aufbau nicht starr vorgegeben ist, sondern nach Bedarf anpassbar/konfigurierbar ist

Der Erfindung liegt die Aufgabe zugrunde, ausgehend von der DE 10 2006 019 451 A1 der Anmelderin, unter Benutzung von Mitteln der Datenverarbeitungseinheit eine Steuerung mit flexibler Kommunikations- und Steuerungsstruktur und weiterhin ein Verfahren zu deren Konfiguration zu schaffen.

Diese Aufgabe wird, durch eine Steuerungt gemäß Patentanspruch 1 gelöst.

Die Erfindung bietet alle entscheidenden Vorteile einer Slot-SPS bei
● einem zehn mal kleineren Hardwareaufwand,
● einfachster Installation ohne Öffnen des PCs,
● Unabhängigkeit von speziellen PCs oder Softwareversionen und
● berücksichtigt den Wechsel vom Feldbus- zur Ethemet-Kommunikation.

Weiterhin wird diese Aufgabe, bei einem Verfahren nach Patentanspruch 5 gelöst.

Während beim Stand der Technik stets versucht wurde, die Intelligenz in der Datenverarbeitungseinheit zu implementieren bzw. zu integrieren, wird beim erfindungsgemäßen Verfahren ein völlig neuer Weg mit der Benutzung der Datenverarbeitungseinheit als Kommunikationsplattform geschaffen. Durch die Verfügbarkeit einer lokalen Intelligenz "quasi" direkt am Peripheriegerät und durch Vorverarbeiten und Verdichten der Daten, wird der Aufbau von verteilten, intelligenten Steuerungsarchitekturen mit konventionellen Automatisierungsgeräten ermöglicht, es werden auch in vorteilhafter Weise die Transfers zu einem übergeordneten System wesentlich reduziert und es wird eine schnelle, lokale Reaktion durch Vermeidung der Übertragungs- und Verarbeitungszeit zum bzw. im übergeordneten System ermöglicht.

Weitere Vorteile und Einzelheiten lassen sich der nachfolgenden Beschreibung einer bevorzugten Ausführungsform der Erfindung unter Bezugnahme auf die Zeichnung entnehmen. In der Zeichnung zeigt:
- **FIG. 1**: das Prinzipschaltbild für eine Steuerung, insbesondere speicherprogrammierbare Steuerung mit flexibler Kommunikations- und Steuerungsstruktur gemäß der Erfindung,
- **FIG. 2**: das Prinzipschaltbild für eine reine, auf einem PC integrierte Softwarelösung und
- **FIG. 3**: das Prinzipschaltbild für eine in Form einer Einsteckkarte SLPC (oft als Slot-SPS) realisierte Lösung.

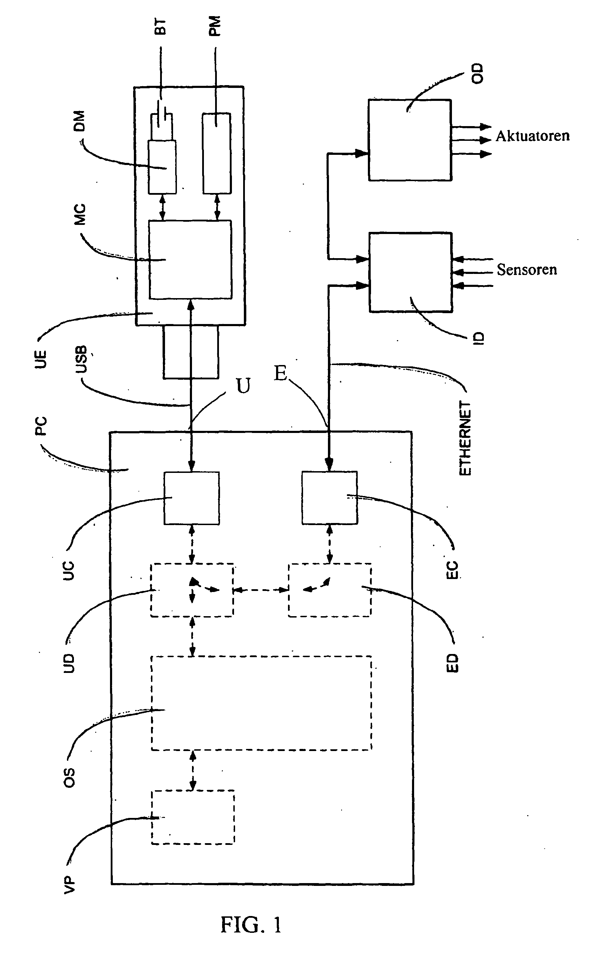

Bei der in FIG. 1 dargestellten Ausgestaltung einer Steuerung, insbesondere speicherprogrammierbaren Steuerung mit flexibler Kommunikations- und Steuerungsstruktur ist ein Informationsträger, nachfolgend die Einheit oder USB-Einheit UE genannt, als kompakte Elektronikeinheit in Form und Abmaßen eines Memory Sticks aufgebaut, wird über beispielsweise einer Standard USB-Schnittstelle an einer Datenverarbeitungseinheit PC angesteckt und darüber mit Spannung versorgt.

Als Datenverarbeitungseinheiten PC kommen primär alle PCs und Terminals mit Standardbetriebssystemen wie Windows oder Linux in Frage. Dabei wird von dem bekannten Universal Serial Bus On The Go (USBOTG) Konzept, einer Ergänzung zur aktuellen Universal Serial Bus Spezifikation 2.0 ausgegangen, welches zwischen vielen verschiedenen Geräteklassen, nämlich Eingabegeräte, Audiogeräte, Massenspeicher und Kommunikationsgeräte, unterscheidet und darauf ausgelegt ist, dass mobile Endgeräte (Mobiltelefone, Personal Digital Assistants, Massenspeicher, Drucker, Scanner, Tastatur, Camcorder, MP3-Abspielgeräte etc.) untereinander einen Datenaustausch realisieren, wobei auf einen vollständig implementierten Wirtrechner (Host-Personal Computer) verzichtet werden kann. Die Endgeräte selbst übernehmen eine Doppelrolle und sind einerseits Hosts und andererseits Peripheriegeräte. Das USBOTG-Konzept ermöglicht eine dynamische Umschaltung zwischen den Funktionen eines Hosts und eines Peripheriegeräts, d.h. Umschaltung zwischen Master/Slave.

Beispielsweise ist bei dem Gegenstand der DE 10 2004 029 889 A1 für den speziellen Fall der Firmware, das ist die Software für den Betrieb des Geräts/Betriebssystem, welche im allgemeinen während der, Gerätelebensdauer konstant bleibt und in Festwertspeichern (ROM, PROM, EPROM) hinterlegt und nicht ohne weiteres ausgetauscht werden kann, nun doch einen neuen Gerätetreiber, d.h. Software, mit der das Betriebssystem eine bestimmte Hardwarekomponente steuert, hinzufügen zu können, vorgesehen, dass im nichtflüchtigen Programmspeicher des ersten Endgeräts ein Speicherbereich für nachladbare Gerätetreiber reserviert ist. Bei der Entwicklung des nachladbaren Gerätetreiber kann das begrenzte Speichervermögen des nichtflüchtigen Programmspeichers des ersten Endgeräts beachtet und der Gerätetreiber muss angepasst an die vorgegebenen Softwareschnittstellen des im nichtflüchtigen Programmspeicher des ersten Endgeräts gespeicherten Betriebssystems entwickelt werden. Dadurch ist eine Neuzulassung des ersten Endgeräts nicht erforderlich. Das Aufspielen des nachladbaren Gerätetreibers erfolgt über spezifizierte Schnittstellen, wie beispielsweise über die USB-Schnittstelle selbst, direkt über serielle Schnittstellen oder durch Herunterladen des nachladbaren Gerätetreibers von einem Personal Computer bzw. aus dem Internet mittels des mobilen Telekommunikationsnetzes. Als erste Endgeräte sind beispielsweise auch mobile drahtlose Telekommunikationsmodule, Personal Digital Assistants, Kameras, Drucker, MP3 Abspielsgeräte etc. einsetzbar. Als zweite bzw. weitere Endgeräte eignen sich neben den externen Speichermedien auch Mobiltelefone, Kameras MP3 Abspielgeräte, Scanner, Drucker und Eingabegeräte wie Tastaturen z.B. für Mobiltelefone. Das Aufspielen des nachladbaren Gerätetreibers ist dabei nicht auf Endgeräte beschränkt, die über USB-Anschlussstellen verfügen, sondern lässt sich ebenso bei anderen Endgeräten einsetzen, die untereinander zur drahtgebundenen oder drahtlosen Datenkommunikation bestimmt sind.

Weiterhin ist aus der DE 602 06 236 T2 eine Automatisierungseinrichtung mit USB-Verbindung für den Anschluss einer oder mehrerer entfernter Einrichtungen bekannt. Um die Störung des Betriebs eines Echtzeit-Anwendungsprogramms zu vermeiden, das in der Automatisierungseinrichtung durchgeführt wird, weist diese eine Software-Task auf, die dazu bestimmt ist, den Fluss der auf dem USB-Verbinder zwischen der Automatisierungseinrichtung und entfernten Einrichtungen ausgetauschten Kommunikationen den Eigenschaften des in der Automatisierungseinrichtung durchgeführten Anwendungsprogramms unterzuordnen. Die Software-Task nutzt eine erste variable Speicherzone des Arbeitsspeichers, die als Empfangsstapel für Eingangsrahmen und als Empfangsstapel für Ausgangsnachrichten bezeichnet wird, wobei die Größe der ersten Speicherzone durch Konstruktion für den Empfangsstapel von Eingangsrahmen und durch Parametrierung für den Empfangsstapel von Ausgangsnachrichten definiert wird. Die Software-Task wird periodisch von einer Zeitbasis der Automatisierungseinrichtung aktiviert und verarbeitet den Sendebereich, indem sie einen Rahmenkonstruktormodul auslöst. Dabei wird die Software-Task beim Empfang einer Kommunikationsnachricht durch eine Unterbrechung ausgelöst, die von der USB-Bus-Steuerschaltung kommt, und weist einen Konstruktormodul von für das Anwendungsprogramm bestimmten Nachrichten nach Synchronisation durch die Zeitbasis der Automatisierungseinrichtung auf. Der Nachrichtenkonstruktor konvertiert USB-Rahmen in Nachrichten, die im Format des Betriebssystems der Automatisierungseinrichtung ausgedrückt und für die Anwendung verständlich sind, und umgekehrt für den Rahmenkonstruktor. Ferner nutzt die Software-Task eine zweite variable Speicherzone des Arbeitsspeichers der Automatisierungseinrichtung, die als Sendestapel für Ausgangsrahmen und als Sendestapel für Eingangsnachrichten bezeichnet wird, wobei die Größe der zweiten variablen Speicherzone durch Konstruktion für den Sendestapel von Ausgangsrahmen und durch Parametrierung für den Sendestapel von Eingangsnachrichten zugeordnet wird.

Weiterhin weist die Software-Task einen Parametrierungsmodul auf, der eine Softwarefunktion der Parametrierung der Speicherzonen enthält, die als Sendestapel von Eingangsnachrichten und als Empfangsstapel von Ausgangsnachrichten verwendet werden. Insbesondere weist die Software-Task einen Verwaltungsmodul der zum Anwendungsprogramm eingehenden Nachrichten und einen Verwaltungsmodul der vom Anwendungsprogramm kommenden, ausgehenden Nachrichten auf. Der Verwaltungsmodul der eingehenden Nachrichten begrenzt die Anzahl von zu Beginn eines Zyklus des Anwendungsprogramms gelesenen Nachrichten auf einen bestimmten Wert (zum Beispiel vier Nachrichten pro Zyklus für ein Modell einer Automatisierungseinrichtung mittlerer Qualität). Schließlich weist die Automatisierungseinrichtung einen Treiber auf, der zu Beginn des Zyklus des Anwendungsprogramms das Lesen der eingehenden Nachrichten auslöst und am Ende des Zyklus des Anwendungsprogramms und vor dem Beginn des folgenden Zyklus das Schreiben der ausgehenden Nachrichten auslöst.

Bei einer Ausgestaltung der Steuerung mit flexibler Kommunikations- und Steuerungsstruktur bzw. beim Verfahren erkennt ein USB-Controller UC auf dem Datenverarbeitungsgerät PC die USB-Einheit UE, lädt von dieser einen Treiber UD und führt dessen Installation selbständig durch. Diese Bedienung ist an sich identisch mit dem von jedem PC-Benutzer beherrschten Einstecken und Nutzen eines Memory Sticks.

Über die USB-Schnittstelle U erfolgt der Datenaustausch zum Datenverarbeitungsgerät PC mit 480 MBit/s. Damit ist eine ausreichende Übertragungsbandbreite sichergestellt, um Datenpakete über eine mit 100 MBit/s arbeitende Ethernet-Schnittstelle E des Datenverarbeitungsgeräts PC auszugeben und gleichzeitig Daten über das Betriebssystem OS mit einer PC-Applikation, z.B. einer Visualisierung VP, auszutauschen.

Die im Datenverarbeitungsgerät PC interne Übertragung der Daten zwischen USB-Controller UC und Ethernet-Controller EC erfolgt, logisch gesehen, unterhalb des Betriebssystems OS auf Ebene des USB-Treibers UD und des Ethernet-Treibers ED. Die Informationen, insbesondere Daten werden transparent (d.h. als Ethernet-Frames) zwischen den Controllern UC, EC ausgetauscht.

Damit ist diese Übertragung frei von Belastung durch Applikationsprogramme, die unter der Kontrolle des Betriebssystems (im Speicher OS) laufen und der Prozessor des Datenverarbeitungsgeräts PC wird nur minimal belastet.

Die USB-Einheit UE mit einem integrierten Mikrocontroller MC stellt die gesamte Rechenleistung zur Abwicklung eines Ethernet basierten Datenübertragungsprotokolls, wie z.B. PROFINET, EtherCAT, SERCOS III, Ethernet/IP oder Powerlink, zur Verfügung. Über die USB-Schnittstelle (erste Kommunikationsschnittstelle UC) werden direkt die Ethernet-Frames ausgegeben bzw. eingelesen. Die Aufgaben des Mikrocontrollers MC als Kommunikationsprozessor sind:
● Empfang/Versenden der Informationen/Daten,
● Sicherung der Übertragung (Parity-Modes: z.B. Paritätsprüfung als einfaches Verfahren zur Erkennung von Übertragungsfehlern, wobei für eine Gruppe von Bits, die darin enthaltene Anzahl der "Einsen" durch die entsprechende Belegung eines zusätzlichen Paritätsbits auf eine gerade bzw. ungerade Anzahl ergänzt wird),
● Entlastung des Hauptprozessors von IO-Arbeiten,
● Zwischenspeicherung der zu übertragenden Daten / übertragenen Daten
● Signalisierung mittels IRQ (Interrupt Request: ein Hardware-Signal, das von Geräten verwendet wird, um eine Interrupt-Service-Routine des Host-Systems auszulösen. Bei Auslösung eines IRQs beendet die Steuereinrichtung alle momentanen Berechnungen, sichert den Berechnungsstatus und behandelt vorrangig den IRQ) an den übergeordneten Prozessor, wenn Daten verfügbar sind oder Daten erfolgreich gesendet wurden,
● Datenpakete können mittels DMA (Direct Memory Acces = Direktzugriff auf den Arbeitsspeicher eines Rechners unter Umgehung der Steuereinrichtung; wenn verfügbar) selbstständig abgeholt und übertragen oder nach Empfang in den Datenspeicher DM gelegt werden.

Die USB-Einheit UE mit dem integrierten Mikrocontroller MC stellt außerdem die gesamte Rechenleistung zur Verknüpfung der Daten aus dem Ethernet Protokoll und der PC-Applikation nach einem frei programmierbaren Ablauf (Speicherprogrammierbare Steuerung SPS) zur Verfügung. Alternativ kann hierfür ein weiterer Mikroprozessor /Mikrocontroller vorgesehen werden, welcher gemäß dem Prinzip der verteilten Intelligenz mit dem Mikrocontroller MC zusammenarbeitet.

Die USB-Einheit UE verfügt über einen nullspannungssicheren Programm-Speicher PM, der das frei programmierbare Ablaufprogramm (SPS-Programm) enthält.

Des weiteren verfügt die USB-Einheit über einen Datenspeicher DM der die aktuellen Prozessdaten nullspannungssicher speichert. Dies kann über eine Batteriepufferung eines statischen RAMs erfolgen oder durch kurzzeitiges Puffern der Betriebsspannung des Mikrocontrollers MC und speichern in einen nullspannungssicheren Speichers z.B. NVRAM oder Flash.

Das Ablaufprogramm wird über die USB-Schnittstelle (erste Kommunikationsschnittstelle UC) in den Programmspeicher PM geladen. Dies kann über ein Applikationsprögramm auf dem Datenverarbeitungsgerät PC erfolgen. Im Rahmen der Erfindung ist in besonders vorteilhafter Weise der Einsatz der USB-Einheit UE in der Funktion eines Memory Sticks möglich. Hierbei wird die USB-Einheit UE auf die USB-Schnittstelle eines anderen PCs gesteckt und das Ablaufprogramm wird über eine Datei-Kopierfunktion dessen Betriebssystems in den Programmspeicher PM der USB-Einheit UE übertragen. Anschließend wird die USB-Einheit UE wieder auf die USB-Schnittstelle des als Steuerungsrechner zum Einsatz kommenden PCs gesteckt.

Der Austausch der Informationen, beispielsweise Ein- und Ausgabedaten (bei der Vernetzung von Sensoren und Aktuatoren wie Stellmotoren, Schaltkupplungen, Magnetventil, Leistungsschalter o.ä) oder zur Steuerung/Ablaufsteuerung von Maschinen, Anlageteilen, Vernetzung von Fertigungszellen oder Anbinden an übergeordnete Systeme, beispielsweise Leitwarte, mit in der Feldebene (Automatisierungstechnik) oder im Netzwerk (beispielsweise ETHERNET, USB) befindlicher Geräte erfolgt bei dem dargestellten Ausführungsbeispiel über die Ethernet-Schnittstelle der Datenverarbeitungseinheit PC und den daran angeschlossenen Geräten (der Prozessumgebung bei einem Automatisierungsgerät), beispielsweise Eingabeeinheit ID, Ausgabeeinheit OD, Workstation. In beiden Fällen weisen die Geräte eine sogenannte Busanschaltung auf, welche die daran angeschlossene (Prozess-) Peripherie über das Netzwerk/Feldbus (beispielsweise ETHERNET, INTERBUS, Arcnet ein echtzeitfähiger Feldbus für industrielle Hochgeschwindigkeitanwendungen speziell zur Vernetzung intelligenter Einheiten/Geräte, beispielsweise zur Kommunikation zwischen Steuereinrichtungen/Controllern oder SPS-Systemen mit PC-Anwendung und Datenraten zwischen 30 Bit/s bis 10 Mbit/s und variablen Paketlängen von 1 bis 5.507 Datenbytes über die Übertragungsmedien Koaxial-Kabel, Lichtwellenleiter oder Zweidrahtleitung) und der Datenverarbeitungseinheit PC mit dem Informationsträger/Steuerung UE verbindet.

Damit ergeben sich folgende Vorteile:
- Das Übertragungsprotokoll und die Steuerungsfunktionen müssen nicht unter dem Betriebssystem OS der Datenverarbeitungseinheit PC laufen, was zu hohen Kosteneinsparungen führt,
- keine mehrfachen Implementierungen für Windows, Linux, usw.
- keine Anpassungen bei Versionsänderung des Betriebssystems OS und
- keine Anpassung an neue Hardware der Datenverarbeitungseinheit PC bei einer USB-Standardschnittstelle UC.

Die Applikation auf der Datenverarbeitungseinheit PC läuft unabhängig von dem Übertragungsprotokoll und der Steuerungsfunktion und benötigt dafür keine Rechenleistung. Die Echtzeiteigenschaften des Übertragungsprotokolls können gewährleistet werden, da zum Datenaustausch zwischen USB und Ethernet keine Betriebssystemfunktionen benötigt werden.

Die USB-Einheit bzw. der Informationsträger UE kann (Prozess-) Daten auch bei Spannungsausfall oder Abschalten des Datenverärbeitungsgeräts PC oder beim Stehenbleiben eines Applikationsprogramms des Datenverarbeitungsgeräts PC (siehe nachfolgend Filter - oder WDM-Treiber) zwischenspeichern (beispielsweise Spannungsversorgung mittels Batterie/Akku BT).

Über die USB-Schnittstelle läst sich durch einfaches Einstecken der USB-Einheit UE eine Elektronik zur Abarbeitung von Übertragungsprotokoll und Steuerungsfunktionen an einer Vielzahl unterschiedlicher Datenverarbeitungseinheit integrieren, ohne dass die Datenverarbeitungseinheit PC geöffnet werden muss.

Die USB-Einheit UE selber kann als Programmspeicher für die Steuerungsfunktionen dienen und darüber auch Programme zwischen Programmiergerät und Datenverarbeitungseinheit ausgetauscht werden.

Durch Austauschen der USB-Einheit UE könne verschiedene Übertragungsprotokolle und Steuerungsfunktionen an die Datenverarbeitungseinheit PC angeschlossen werden.

Unter Einsatz eines Safety-Protokolls können PC und USB-Einheit UE einander überwachen und somit als Sicherheitssteuerung arbeiten. Ein universelles Eingabe-/Ausgabemodul, welches einerseits an ein Netzwerk andererseits an einen Rückwandbus und an eine Rückwandbus-Erweiterung angeschlossen ist, auf der Basis eines Safety-Protokolls ist aus der EP 1 703 346 A2 bekannt. Erfindungsgemäß werden alle Ethernet Frames die zwischen den Treibern UD und ED ausgetauscht werden über ein Betriebssystem (im Speicher) OS an ein Überwachungsprogramm kopiert. Die gesamten Datenpfade arbeiten als ,grauer Kanal' im Sinne einer Safety-Steuerung und müssen bei Einsatz eines Safety-Protokolls nicht selber sicher sein. Das Überwachungsprogramm wertet die Telegramminhalte aus und kann bei Inkonsistenz die Betriebsspannung der USB-Einheit UE unabhängig von der USB-Einheit UE ausschalten. Insbesondere überwacht das Safety Protokoll mindestens sechs mögliche Übertragungsfehler, nämlich:
- Wiederholungen,
- Verlust,
- Einfügung,
- falsche Abfolge,
- Verfälschung und
- Verzögerung.

Weitere Vorteile sind:
- Die SPS befindet sich auf dem Informationsträger/der Einheit UE und nicht auf der Datenverarbeitungseinheit PC,
- die Kommunikation befindet sich im wesentlichen auf dem Informationsträger/der Einheit UE,
- beide belasten nicht die Einheit PC,
- beide sind unabhängig vom Betriebssystem OS (Speicher),
- beide lassen sich so einfach installieren wie das Einstecken eines Memory Sticks,
- auf dem Informationsträger/der Einheit UE befindet sich auch die Konfiguration und das SPS Programm und erlaubt somit einen einfachen Austausch,
- der Informationsträger/der Einheit UE Stick hat einen gepufferten Speicher (bzw. Speicherbereiche DM, PM) und behält seine Informationen bei Spannungsausfall (bzw. Batterie/Akku BT),
- der Informationsträger/der Einheit UE kann auf jeder Datenverarbeitungseinheit, insbesondere PC zum Einsatz kommen und benötigt keine weiteren Anschlüsse oder Versorgungsspannungen,
- der Informationsträger/der Einheit UE dient als Kopierschutz (beispielsweise kann zur Ver- und Entschlüsselung der Informationen/Daten ein starrer, ein dynamischer oder ein rollierender Schlüssel oder ein "verschlüsselter Container" oder die Hersteller-ID und/oder Device-ID benutzt werden) für die SPS und das SPS-Programm,
- der Informationsträger/der Einheit UE ist wesentlich preiswerter als die heute im PC eingesetzten Slot-PLC-Karten und kann ohne Öffnen des PCs von jedem Laien installiert werden.

Für das Anwendungsbeispiel einer USB-Einheit UE ist die Funktionsweise wie folgt:
Der Anwender steckt die USB-Einheit UE in die erste Kommunikationsschnittstelle U einer Datenverarbeitungseinheit PC. Das Windows- (bzw. VISTA oder LINUX u.a.) Betriebssystem (siehe FIG. 1 im Speicher OS) stellt dies fest und liest im USB-Einheit/Device UE vorhandene Hersteller-ID und Device-ID aus. Diese sind eindeutig und identifizieren Hersteller und die USB-Einheit/Gerät UE. Des Weiteren wird der Gerätename als Klartext aus dem USB-Descriptor String ausgelesen. Des Weiteren wird der Gerätename als Klartext aus dem USB-Descriptor String ausgelesen. Das (Windows-) Betriebssystem zeigt den Gerätenamen an (Visualisierung VP) und sucht nach einem passenden Treiber auf seiner Festplatte/Speicher OS.
   - Ist der Treiber bereits installiert wird er gestartet.
   - Ist der Treiber auf der Festplatte OS vorhanden, wird gefragt, ob er jetzt installiert werden soll.
   - Wird der Treiber nicht gefunden, wird der Anwender aufgefordert, beispielsweise eine CD mit dem Treiber einzulegen.

Gegebenenfalls wird der Treiber jetzt installiert und gestartet. Damit erscheint das Icon für das USB-Device/Gerät UE in der Statusleiste der Visualisierung VP (siehe FIG. 1). Ein Klick auf das Icon öffnet ein Statusmenü. Hier kann der Anwender sehen, ob
- die SPS (USB-Device/Gerät UE) läuft,
- ob die Kommunikation läuft,
- ob Fehler festgestellt wurden,
und er kann ebenfalls durch Klicken (oder Berühren bei einem Touch Panel) auf Kommandofelder der Visualisierung VP die SPS (USB Device/Gerät UE) und (oder) die Kommunikation starten bzw. stoppen.

Ist die SPS (USB-Device/Gerät UE) und die Kommunkation gestartet, ist das System in Betrieb und
- das USB-Device/Gerät UE sendet Ethernet Frames über seine USB-Schnittstelle zur ersten Kommunikationsschnittstelle U der Datenverarbeitungseinrichtung PC,
- der installierte Treiber UD nimmt sie entgegen und routet sie zur zweiten Kommunikationsschnittstelle/ Ethernetschnittstelle E weiter,
- eingehende Ethernettelegramme (von der (Prozess-) Peripherie) leitet der Treiber ED weiter zur USB-Schnittstelle U.

Auf dem USB Device/Gerät UE läuft ein Ethernet Protokollstack, der über den Pfad: USB-/Ethemetschnittstelle U/E Informationen, insbesondere Daten mit Geräten (beispielsweise ID, OD) austauscht, die am (Ethemet-) Netzwerk ETHERNET angeschlossen sind. Des Weiteren läuft auf dem Gerät UE eine SPS, welche die ausgetauschten Daten logisch verarbeitet und welche daraus neue Ausgangsdaten für die angeschlossenen Geräte ID, OD (siehe FIG. 1) erzeugt.

Hinsichtlich der beim Gegenstand der Erfindung einsetzbaren Treibertechnologie sind keine Einschränkungen zu berücksichtigen. Ein Gerätetreiber, kurz Treiber genannt, ist ein Computerprogramm oder -modul, das die Interaktion mit angeschlossenen Geräten steuert. Dazu benutzt es Schnittstellen zum Kommunikationsbus oder anderen Kommunikationssystemen, an denen das Gerät angeschlossen ist, um Steuersignale und/oder Daten zum Gerät zu senden bzw. von ihm zu empfangen. Auf der anderen Seite stellt es eine Schnittstelle für eine Nutzung dieser Funktionen durch das Betriebssystem oder Anwendungsprogramm bereit. Folgt diese Schnittstelle einem standardisierten Modell, bietet der Gerätetreiber somit dem Betriebssystem oder der Anwendungssoftware die Möglichkeit, transparent mit dem Gerät zu kommunizieren. Eine spezielle Anpassung an jede mögliche Hardwarekonfiguration ist so nicht mehr nötig, erleichtert die Programmierung der Anwendungssoftware und ermöglicht einen universellen Einsatz (Schnittstelle zu anderen Computer-Systemen) auch mit noch unbekannten, zukünftigen Geräten. Beispielsweise gibt es für Windows so genannte Filter- oder WDM-Treiber (Windows Driver Model). Diese klinken sich zwischen dem Gerätetreiber und dem Windows Betriebssystem ein. Sie sind dazu da, den Datenaustausch zwischen Windows und dem Gerät zu analysieren bzw. zu protokollieren. Da die Gerätedaten durch den Filter- oder WDM-Treiber durchgereicht wird, hat er auch die Möglichkeit diese zu filtern oder über eine andere Schnittstelle auszugeben. Im Beispiels-Fall würde über dem Ethernet- und dem USB-Treiber ED, US jeweils ein zusätzlicher Filter- oder WDM-Treiber installiert, die die USB- und Ethernetdaten gegeneinander umleiten. Der Vorteil besteht darin, dass die Treiberebene unabhängig von der Programmausführung unter Windows arbeitet und damit keinen Einfluss auf die gerade ablaufenden Windowsprogramme hat. Im Gegenzug laufen die Treiber auch dann weiter, wenn ein Applikationsprogramm stehen bleibt oder 'abstürzt'. Dabei ist durch die erfindungsgemäße Konfigurierbarkeit (Open Source Treiber), beispielsweise bei der Neuinstallation des Betriebsystems, die Herstellerabhängigkeit von proprietären Treibern gelöst.

In Weiterbildung der Erfindung werden die Informationen (Daten), welche der Informationsträger, beispielsweise die USB-Einheit UE in seiner Masterfunktion einsammelt, im Speicher DM so abgelegt, dass diese vor unberechtigten Zugriffen geschützt sind (beispielsweise wird zur Ver- und Entschlüsselung der Informationen/Daten ein starrer, ein dynamischer oder ein rollierender Schlüssel oder ein "verschlüsselter Container" benutzt). Zum Auslesen wird die USB-Einheit UE am Adapter (USB) zum Slave und kann durch ein Programm mit entsprechender Berechtigung ausgelesen und gelöscht werden. Mit dem gleichen Dätentransferverfahren kann im Slave Mode auch die Betriebssoftware der USB-Einheit UE geändert werden.

In weiterer Ausgestaltung der Erfindung kann die USB-Einheit UE Eingabemittel/Tasten und Anzeigemittel (beispielsweise Leuchtdioden oder alphanumerische Anzeige) aufweisen (in der Zeichnung nicht dargestellt), wobei jedem Eingabemittel/Taste eine oder mehrere Funktionen zugewiesen werden können. Damit nun nach Maßgabe der Anzahl und/oder Zeitdauer von Betätigungen des Eingabemittels in Form einer Taste quasi eine doppelte Anzahl von verschiedenartigen Steuerbefehlen zur Verfügung steht, kann von der Datenverarbeitungseinheit PC aus die Betriebssoftware der Einheit UE (beispielsweise memory stick als Datenspeicher SP zur Zwischenspeicherung der extern zugeführten Daten) geändert/upgedatet werden. Somit wird beim Anschließen der Einheit UE an das jeweilige Gerät PC im Dialogbetrieb zwischen den Steuereinrichtungen von Einheit UE bzw. Gerät PC eine automatische Konfiguration der Einheit UE /Schnittstelle mit den Verfahrensschritten Authentifikation, automatische Erkennung des Transfermoduses (Master/Slave) und der Datentransferrichtung und nach deren Maßgabe Wahl der entsprechenden Übertragungsart/ - geschwindigkeit/ -protokolls für das Herunterladen der Daten durchgeführt werden.

Durch die Konfigurierbarkeit in Verbindung mit dem Konzept der "offenen" Systemschnittstellen wird einerseits im Fehlerfall häufig eine rasche Fehlerbehebung ermöglicht, indem die Einheit UE in den Lade-Zustand gebracht wird, andererseits ist eine Vielzahl von Einsatzmöglichkeiten gegeben. Beispielsweise kann die Einheit UE beim Authentifizieren bei einem Computer (Aufstecken auf die USB-Schnittstelle und automatischer Verschlüsselung der Daten, so dass die benutzerseitige Eingabe eines Passworts entfallen kann) oder bei einem homebanking interface HBCI, beim Abholen der Daten von verschiedenen Registrierkassen (Gehen von Kasse zu Kasse) oder zur Inventur und nachfolgender zentraler Auswertung oder für Sicherheitspersonal in Verbindung mit elektronischen Stechuhren und zur Authentifizierung bei Zutrittskontrollsystemen eingesetzt werden. In vorteilhafter Weise wird beim erfindungsgemäßen Konzept eine verschlüsselte Datenausgabe ermöglicht und die Dateninhalte mehrerer Geräte können in der Einheit UE unverkennbar archiviert werden. Hierzu kann insbesondere eine Speicherverwaltung und eine Speicherzugriffskontrolle vorgesehen werden, welche in den Datenspeicher DM eingelesene Daten mit einer Kennung (Kennzeichen u. Datum) unverkennbar abgelegen und wobei durch Betätigen der Eingabemittel/Taste nur eine Auswahl von herunterladbaren Daten jedoch nicht ein Löschen der Daten ermöglicht wird. Hinzukommt, dass auch ein ungeübter Benutzer die Einheit UE beim Datenaustausch, Anstoßen von Prozessteuerungen u.a. bedienen kann, ohne dass die Gefahr eines unbefugten Datenzugriffs oder eines Benutzerfehlers besteht.

Die Erfindung ist nicht auf die dargestellten und beschriebenen Ausführungsbeispiele beschränkt, sondern umfasst auch alle im Sinne der Erfindung gleichwirkende Ausführungen. Im Rahmen der Erfindung kann der in den Datenspeicher DM abgespeicherte Kennzeichenblock eine Information über die Zahl der Zugriffe und/oder den jeweiligen Zugriffscode des Berechtigten und/oder Datum und/oder Uhrzeit beinhalten; ferner kann der Kennzeichenblock eine Verwaltungsinformation darüber beinhalten, welches Scrambling (aus einer Folge verschiedener Scramblingmethoden auch beispielsweise adaptives Scrambling) bereits ausgeführt wurde, und im Protokoll ist vermerkt, nach welcher Scramblingmethode die Daten bearbeitet sind. Zum Diebstahlschutz ist dem Informationsträger UE eine eindeutige Seriennummer fest zugeordnet und dessen Betriebsprogramm kann modular erweitert und ausgetauscht werden. Ferner kann der Mikrocontroller MC die Informationen/Daten im Hammingcode mit einer Hamming-Distanz von ≥ 1, insbesondere 4, verarbeiten und kann auch die Verschlüsselung und Entschlüsselung der Daten durchführen. Für die Datenübertragung kann ein robustes Datensicherungsverfahren benutzt werden. Vorzugsweise wird ein CRC-Datensicherungsverfahren (cyclic redundancy check = zyklische Blockprüfung), z.B. CRC-32 benutzt, bei dem die zu übertragenden Datenworte durch ein Polynom dividiert werden und der Rest der Division jeweils als Prüfzeichen mit übertragen wird. Empfängerseitig wird bei den in den Geräten empfangenen Datenworten die gleiche Division durchgeführt und kontrolliert, ob das Ergebnis mit dem Prüfzeichen übereinstimmt.

## Patentansprüche

1. Steuerung mit flexibler Kommunikations- und Steuerungsstruktur, welche aufweist:
● eine Datenverarbeitungseinheit (PC) in Form eines PCs mit mindestens zwei oder mehreren Kommunikationsschnittstellen (U, E), welche über eine Ethernetverbindung mit einer Feldebene eines Automatisierungsprozesses verbunden ist,
● einen an die erste Kommunikationsschnittstelle (U) ansteckbaren Informationsträger (UE) in Form einer USB-Einheit in Form und Abmaßen eines Memory-Sticks mit einem Mikrocontroller (MC), einem Programmspeicher (PM) und einem Datenspeicher (DM), eingerichtet zur Realisierung einer in der USB-Einheit (UE) integrierten SPS und
● ein an die zweite Kommunikationsschnittstelle (E) ansteckbares Buskabel zum Anschluss von untereinander über einen seriellen Datenbus (FES) kommunizierenden Geräten (ID, OD), der Feldebene
so dass der Informationsträger (UE) durch Aufstecken auf die erste Kommunikationsschnittstelle (U) der Datenverarbeitungseinheit (PC) und unter Zuhilfenahme von Kommunikationstreibern (UD, ED) der ersten und zweiten Kommunikationsschnittstelle (U, E) die Datenverarbeitungseinheit (PC) unter Benutzung der Datenverarbeitungseinheit als Kommunikationsplattform zur einer frei programmierbaren Steuerung erweitert und die Kommunikation zwischen SPS und Feldebene mittels Ethernet-Telegrammen über die Datenverarbeitungseinheit (PC) als Kommunikationsplattform erfolgt.

2. Steuerung nach Anspruch 1, **dadurch gekennzeichnet, dass** der inder USB- Einheit (UE) integrierte Mikrocontroller (MC) ein Datenübertragungsprotokoll realisiert und durch Aufstecken auf eine Schnittstelle (U) direkt die Telegrammdaten eines Datenübertragungsprotokolls ausgibt bzw. einliest und die zweite Kommunikationsschnittstelle (E) auf der Datenverarbeitungseinheit (PC) benutzt, diese Telegrammdaten an die daran angeschlossenen Geräte (ID, OD) weiterzuleiten.

3. Steuerung nach Anspruch 1, **dadurch gekennzeichnet, dass** der Datenspeicher (DM) als nullspannungssicherer Speicher ausgestaltet ist, um darin aktuelle Prozessdaten bei einem Spannungsausfall zu sichern und nach wieder Herstellen der Spannungsversorgung diese Prozessdaten einer Ablaufsteuerung wieder zur Verfügung zu stellen.

4. Steuerung nach Anspruch 1, **dadurch gekennzeichnet, dass** die erste Kommunikationsschnittstelle (U) in Form einer USB-Schnittstelle ausgestaltet ist.

5. Verfahren zur Konfiguration einer Steuerung bestehend aus einer Datenverarbeitungseinheit (PC) in Form eines PCs mit mindestens zwei oder mehreren Kommunikationsschnittstellen (U, E), welche über eine Ethernetverbindung mit einer Feldebene eines Automatisierungsprozesses verbunden ist, und einem an der ersten Kommunikationsschnittstelle (U) ansteckbaren Informationsträger (UE) in Form einer USB-Einheit in Form und Abmaßen eines Memory-Sticks mit einem Mikrocontroller (MC), einem Programmspeicher (PM) und einem Datenspeicher (DM), eingerichtet zur Realisierung einer in der USB-Einheit (UE) integrierten SPS, bei dem
● der Informationsträger (UE) sowohl zur nullspannungssicheren Speicherung von Steuerungsprogramm als auch Datenübertragungsprotokoll und dazugehörigen Konfigurationsdaten beim Transport von einer zu einer anderen Datenverarbeitungseinheit (PC) dient,
● der Informationsträger (UE) als frei programmierbare Steuerung oder unter zu Hilfenahme des oder eines im Informationsträger (UE) integrierten Mikrocontrollers (MC), welcher ein Datenübertragungsprotokoll realisiert, als Datenübertragungsprotokolleinheit arbeitet und
● die Datenverarbeitungseinheit (PC) als Kommunikationsplattform zur zweiten Kommunikationsschinttstelle (E), an welche untereinander über einen seriellen Datenbus (FES) kommunizierende Geräte (ID, OD) der Feldbene angeschlossen sind, dient und die Kommunikation zwischen SPS und Feldebene mittels Ethernet-Telegrammen über die Datenverarbeitungseinheit (PC) als Kommunikationsplattform erfolgt.

6. Verfahren nach Anspruch 5, **dadurch gekennzeichnet, dass** USB-Einheit (UE) und Datenverarbeitungseinheit (PC) unter Einsatz eines Safety Protokolls Daten austauschen und durch gegenseitige Überwachung das gesamte System zu einer Sicherheitssteuerung machen.

7. Verfahren nach Anspruch 6, **dadurch gekennzeichnet, dass** das Safety Protokoll mindestens sechs mögliche Übertragungsfehler, nämlich
- Wiederholungen,
- Verlust,
- Einfügung,
- falsche Abfolge,
- Verfälschung und
- Verzögerung
überwacht.

8. Verfahren nach Anspruch 5, **dadurch gekennzeichnet, dass** durch direktes Austauschen von Telegramm-Frames auf Treiberebene (UD, ED) zwischen den beiden Kommunikationsschnittstellen (U, E) der Datenverarbeitungseinheit (PC), diese nur minimal belastet wird und Applikationsprogramme unter dem in einem Speicher (OS) enthaltenen Betriebssystem der Datenverarbeitungseinheit (PC) auf die Echtzeiteigenschaften des Telegrammaustauschs nur minimalen Einfluss haben.

9. Verfahren nach Anspruch 5, **dadurch gekennzeichnet, dass** ein in der Datenverarbeitungseinheit (PC) angeordneter USB-Controller (UC) die an die erste Schnittstelle (U) angeschlossene USB-Einheit (UE) erkennt, von dieser einen Treiber (UD) lädt und dessen Installation selbständig durchführt.

10. Verfahren nach Anspruch 9, **dadurch gekennzeichnet, dass** zu einer dynamischen Umschaltung zwischen Datenverarbeitungseinheit (PC) und USB-Einheit (UE) das USBOTG-Verfahren benutzt wird und der USB-Controller (UC) eine in der USB-Einheit (UE) vorhandene Hersteller-ID und Device-ID ausliest und dass ein gespeichertes Betriebssystem (OS) den Gerätenamen anzeigt, Visualisierung VP, und nach einem passenden Treiber in seinem Speicher (OS) sucht.

11. Verfahren nach Anspruch 5, 8 und 9, **dadurch gekennzeichnet, dass** für den Fall, dass im Betriebzustand und wenn die in der USB-Einheit (UE) angeordnete speicherprogrammierbare Steuerung SPS und eine Kommunikation gestartet sind,
- die USB-Einheit (UE) Ethemet-Frames über ihre USB-Schnittstelle zur ersten Kommunikationsschnittstelle (U) der Datenverarbeitungs die USB-Einheit (PC) sendet,
- ein in der Datenverarbeitungs die USB-Einheit (PC) installierter Treiber (UD) diese entgegennimmt und zur zweiten Kommunikationsschnittstelle/Ethernetschnittstelle (E) weiterroutet und
- eingehende Ethernettelegramme von einer Prozess-Peripherie der Treiber (ED) zur USB-Schnittstelle (U) weiterleitet,
- so dass die Informationen transparent zwischen den Controllern (UC, EC) ausgetauscht werden.

12. Verfahren nach Anspruch 11, **dadurch gekennzeichnet, dass** zu dem Ethernet- und dem USB-Treiber (ED, US) jeweils ein zusätzlicher Filter - oder WDM-Treiber installiert ist und die USB- und Ethemetdaten gegeneinander umgeleitet werden, so dass die Treiberebene unabhängig von der Programmausführung unter Windows arbeitet und damit keinen Einfluss auf die gerade ablaufenden Windowsprogramme hat.

13. Verfahren nach Anspruch 5 und 10, **dadurch gekennzeichnet, dass** Informationen, welche die USB-Einheit (UE) in ihrer Masterfünktion nach dem USBOTG-Verfahren einsammelt, im Speicher (DM) so abgelegt werden, dass diese vor unberechtigten Zugriffen geschützt sind.

14. Verfahren nach Anspruch 5, **dadurch gekennzeichnet, dass** beim Anschließen oder der Inbetriebnahme der USB-Einheit (UE) an die jeweilige Datenverarbeitungseinheit (PC) im Dialogbetrieb zwischen Steuereinrichtungen (MC) der USB-Einheit (UE) und dem Gerät (PC) eine automatische Konfiguration der USB-Einheit (UE) mit den Verfahrensschritten:
● Authentifikation
● automatische Erkennung des Transfermoduses (Master/Slave) und der Datentransferrichtung und
● nach deren Maßgabe Wahl der entsprechenden Übertragungsart/ - geschwindigkeit/ -protokolls für das Herunterladen der Informationen durchgeführt werden.

15. Verfahren nach Anspruch 5, **dadurch gekennzeichnet, dass** zur verschlüsselten Datenausgabe und zur unverkennbaren Archivierung der Dateninhalte mehrerer Geräte (ID, OD) in der USB-Einheit (UE) eine Speicherverwaltung und eine Speicherzugriffskontrolle vorgesehen sind, welche in den Datenspeicher (DM) eingelesene Daten mit einer Kennung, Kennzeichen und Datum, unverkennbar ablegen.

## Claims

1. A control system with flexible communication and control structure, said system comprises:
- a data processing unit (PC) in form of a PC comprising at least two or more communications interfaces (U, E), which are connected via an Ethernet connection with a field level of an automated process,
- an information carrier (UE) in form of an USB device of the shape and dimensions of a memory stick that can be connected to the first communication interface (U), said medium comprising a microcontroller (MC), a program memory (PM) and a data storage medium (DM) implemented to realize an PLC integrated in that USB device (UE), and
- a bus cable that can be connected to the second communication interface (E) for connection of devices (ID, OD) of said field level communicating together by way of a serial data bus (FES),
so that the information carrier (UE) by plugging it on the first communication interface (U) of said data processing unit (PC) and with the aid of communication drivers (UD, ED) of the first and second communication interface (U, E) said data processing unit (PC) by using it implements a free-programmable sequential control and so that communication between PLC and field level by Ethernet telegrams is done via the data processing unit (PC) as a communication platform.

2. The control system according to claim 1, wherein said in the USB device (UE) integrated microcontroller (MC) is realizing a data transmission protocol, and by attaching an interface (U), directly reads out or reads in the message data of a data transmission protocol and the second communications interface (E) on the data processing unit (PC) is used to forward the message data to the devices (ID, OD) connected to it.

3. The control system according to claim 1, wherein said data memory (DM) is configured as a nonvolatile memory for order to secure current process data in a power failure, and after re-establishing the power supply, to make available again these process data for a process control.

4. The control system according to claim 1, wherein the first communication interface (U) is designed in the form of an USB interface.

5. A method for configuration of a control system with a data processing unit (PC) in form of a PC comprising at least two or more communications interfaces (U, E), which are connected via an Ethernet connection with a field level of an automated process, and an at a first communication interface (U) attachable information carrier (UE) in form of an USB device of the shape and dimensions of a memory stick that can be connected to the first communication interface (U), said medium comprising a microcontroller (MC), a program memory (PM) and a data storage medium (DM) implemented to realize an PLC integrated in that USB device (UE), wherein
- the information carrier (UE) is used both for the transportation of nonvolatile control program as well as data transmission protocol and the associated configuration data from a one to a data processing unit (PC),
- the information carrier (UE) as a programmable controller or with help of the or in the information carrier (UE) integrated microcontroller (MC), which implemented a data transfer protocol works as protocol data communication unit, and
- the data processing unit (PC) is used as a communications platform to a second communication interface (E) to said second communication interface (E) devices (ID, OD) of said field level are connected for communicating together via a serial data bus (FES) and so that communication between PLC and field level by Ethernet telegrams is done via the data processing unit (PC) as a communication platform.

6. The method according to claim 5, wherein said USB device (UE) and said data processing unit (PC) using a safety protocol to exchange data and to make the entire system to a security control by the mutual monitoring.

7. The method according to claim 6, wherein the safety protocol monitors of at least six possible transmission errors, namely:
- Repetitions,
- Losses,
- Insertions,
- Wrong sequences,
- Falsifications and
- Delays.

8. The method according to claim 5, wherein by direct exchange of message frames on the driver level (UD, ED) between the two communication interfaces (U, E) of the data processing unit (PC), it is loaded with minimal, and the application programs, under the one store (OS) operating system contained the data processing unit (PC) to the real-time properties of the telegram exchange have a minimal impact.

9. The method according to claim 5, wherein the data processing device (PC) arranged USB controller (UC) identifies a USB unit (UE) connected to the first interface (U), downloads a driver (UD) and performs this installation independently.

10. The method according to claim 9, wherein for the dynamic switching between data processing device (PC) and the USB unit (UE) the USBOTG-method is used, and the USB controller (UC) reads out one in the USB-unit (UE) existing Vendor ID and Device ID and that a stored operating system (OS) indicates the device name, visualization VP and is looking for a suitable driver in its memory (OS).

11. The method according to claim 5, 8 and 9, wherein for the case of operating state and when the programmable logic controller PLC arranged in the information carrier (UE) this and the communications are started,
- the USB-unit (UE) sends Ethernet frames to the first communication interface (U) of the data processing device (PC) via its USB interface,
- the driver (UD) installed in the data processing device (PC) receives it and routed it to the second communication interface / Ethernet interface (E) and
- forwards incoming Ethernet frames from a process periphery of the drivers (ED) to the USB port (U),
- so that the information is transparently communicated between the controllers (UC, EC).

12. The method of claim 11, wherein respectively, an additional filter or WDM driver is installed besides the Ethernet and the USB driver (ED, U.S.), and the USB and Ethernet data are mutually redirected, so that the driver level works independently of the program execution Windows and thus has no influence on the currently running Windows programs.

13. The method according to claim 5 and 10, wherein the information which in its master function the USB-unit (UE) collects according to the USBOTG-method are such stored in the memory (DM) that they are protected against unauthorized access.

14. The method according to claim 5, wherein when connecting to or operation of the USB-unit (UE) with the respective device (PC) in interactive mode between the control means (MC) of the USB-unit (UE) and the device (PC), an automatic configuration of the USB-unit (UE) is carried out said configuration comprising the steps of:
- Authentication,
- Automatic detection of the transfer mode (master / Slave) and of the data transfer direction and
- According to that steps the choice for downloading the information of the corresponding transmission type / speed / protocol is performed.

15. The method according to claim 5, wherein for encrypted data output and for archiving of the data content of multiple devices (ID, OD) unmistakably in the USB-unit (UE) said USB-unit (UE) comprises a memory management and a control of a memory access which data has been read into the data memory (DM) there unmistakably archived with an identifier, mark and date.

## Revendications

1. Commande avec une structure de communication et de commande flexible, laquelle possède :
● Une unité de traitement de données (PC) sous forme d'un PC avec au moins deux ou plusieurs interfaces de communication (U, E), laquelle est connectée à l'aide d'une connexion Ethernet à un terrain d'un processus automatique,
● Un porteur d'information (UE) connectable à la première interface de communication (U) sous forme d'une unité USB dont la forme et les dimensions correspondent à une clé USB avec un microcontrôleur (MC), une mémoire de programme (PM) et une mémoire de données (DM), étant préparée pour la réalisation d'un API intégré dans l'unité USB (UE) et
● Un câble de bus connectable à la deuxième interface de communication (E) pour la connexion des appareils communicants entre eux (ID, OD) du terrain, à l'aide d'un bus de données sériel (FES),
pour que le porteur d'information (UE) par connexion avec la première interface de communication (U) de l'unité de traitement de données (PC) et à l'aide des pilotes de communication (DU, ED) de la première et deuxième interface de communication (U,E) l'unité de traitement de données (PC) sous l'utilisation de l'unité de traitement de données comme plate-forme de communication est élargie à une commande librement programmable et la communication entre l'API et le terrain est réalisée à l'aide d'un télégramme Ethernet avec l'unité de traitement de données (PC) comme plate-forme de communication.

2. Commande selon revendication 1, **caractérisé en ce que** le microcontrôleur (MC) intégré dans l'unité USB (UE) réalise un protocole de transmission de données et par connexion à une interface (U) et sort ou lis directement le données de télégramme d'un protocole de transmission de données et utilise la deuxième interface de communication (E) de l'unité de traitement de données (PC) pour transmettre les données d'information aux appareils connectés (ID, OD).

3. Commande selon revendication 1, **caractérisé en ce que** la mémoire de données (DM) est protégée contre de coupures de courant, pour sauver les données de processus actuelles d'une coupure de courant et après le rétablissement de courant mettre les données de processus à la disposition d'une commande de déroulement.

4. Commande selon revendication 1, **caractérisé en ce que** la première interface de communication (U) est sous forme d'une interface USB.

5. Procédé pour la configuration d'une commande composée d'une unité de traitement de données (PC) sous forme d'un PC avec au moins deux ou plusieurs interfaces de communication (U, E), laquelle est connectée par une connexion Ethernet avec le terrain d'un processus automatique et un porteur d'information (UE) connectable à la première interface de communication (U) sous la forme d'une unité USB dont la forme et les dimensions correspondent à une clé USB avec un microcontrôleur (MC), une mémoire de programme (PM) et une mémoire de données (DM), établis pour la réalisation d'un API intégré dans l'unité USB (UE), où
● Le porteur d'information (UE) sert non seulement de mémorisation de programmes de commande en cas de coupure de courant mais aussi de protocole de transmission de données avec les données de configuration attachées durant la transmission d'une unité de traitement de données (PC) à l'autre,
● Le porteur d'information (UE) comme automate programmable intégré ou à l'aide du ou d'un microcontrôleur (MC) intégré dans le porteur d'information (UE), lequel réalise un protocole de transmission de données, travaille comme unité de protocole de transmission de données et
● L'unité de traitement de données (PC) sert de plate-forme de communication pour le deuxième interface de communication (E), où on a connecté l'un au-dessous de l'autre par un bus de données sériel (FES) des appareils communicants (ID, OD) du terrain et la communication entre l'API et le terrain de processus automatique est effectué par un télégramme Ethernet à l'aide de l'unité de traitement de données (PC) comme plate-forme de communication.

6. Procédé selon revendication 5, **caractérisé en ce que** d'unité (UE) et l'unité de traitement de données (PC) sous l'utilisation d'un protocole de sécurité échangent des données et par une surveillance mutuelle le système entier se transforme en une commande de sécurité.

7. Procédé selon revendication 6, **caractérisé en ce que** le protocole de sécurité surveille au moins six erreurs de transmission possible, à savoir
- répétitions,
- pertes,
- insertion,
- ordre incorrect,
- falsification et
- retard.

8. Procédé selon revendication 5, **caractérisé en ce que** par un échange directe des trame de télégramme au niveau de pilotes (DU, ED) entre les deux interfaces de communication (U, E) de l'unité de traitement de données (PC), la charge l'unité de traitement de données est minimal et le programme d'application sous le système d'exploitation étant dans la mémoire (OS) a seulement une influence minimal sur les caractéristiques en temps réel d'échange de télégramme.

9. Procédé selon revendication 5, **caractérisé en ce que** le contrôleur USB (UC) installé dans l'unité de traitement de données (PC) reconnait l'unité USB connectée à la première interface (U) de laquelle il décharge un pilote et l'installe tout seul.

10. Procédé selon revendication 9, **caractérisé en ce que** pour une commutation dynamique entre l'unité de traitement de données (PC) et l'unité USB (UE) on utilise le procédé USBOTG et le contrôleur USB (UC) lis l'ID de producteur et l'ID de dispositif existant dans l'unité USB (UE) et qu'un système d'exploitation mémorisé (OS) indique le nom de l'appareil, la visualisation VP, et il cherche un pilote convenable dans sa mémoire (OS).

11. Procédé selon revendication 5, 8 et 9 **caractérisé en ce qu**'en cas que dans l'état de fonctionnement et que l'unité USB (UE) et un automate programmable intégré API disposé et une communication ont démarré,
- l'unité USB (UE) émet des trames Ethernet par leur interface USB pour la première interface de communication (U) de l'unité de traitement de données (PC),
- Un pilote (DU) installé dans l'unité de traitement de données (PC) les reçoit et les guide à une deuxième interface de communication/interface Ethernet (E) et
- télégrammes arrivées par Ethernet des pilotes (ED) à la périphérie de processus les guident à l'interface USB (U),
- de manière que les informations soient échangées transparent entre les contrôleurs (UC, EC).

12. Procédé selon revendication 11, **caractérisé en ce que** pour les pilotes Ethernet et USB (ED, US) est respectivement installé un pilote de filtre ou de WDM et que les données USB et Ethernet sont l'un contre l'autre déviées pour que les couches de pilotes travaillent indépendamment du programme sous Windows et ne pas avoir une influence sur les programmes sous Windows travaillant au même moment.

13. Procédé selon revendication 5 et 10, **caractérisé en ce qu**'on mémorise des informations, lesquelles sont cueillies par l'unité USB (UE) dans sa fonction de Master selon le procédé USBOTG, stockées dans la mémoire (DM) de telle manière qu'elles sont protégées contre un accès non autorisé.

14. Procédé selon revendication 5, **caractérisé en ce que** pendant la connexion ou la mise en marche de l'unité USB (UE) à l'unité de traitement de données (PC) respective en dialogue entre des dispositifs de commande (MC) de l'unité USB (UE) et l'appareil (PC) une configuration automatique de l'unité USB est effectuée avec les étapes de procédé suivantes :
● Authenticité,
● Identification automatique du mode de transfert (Master/Slave) et de la direction de transfert et
● En raison de choix de mode de protocole de transfert/-de vitesse pour le déchargement des informations sont effectué.

15. Procédé selon revendication 5, **caractérisé en ce que** pour une sortie de données codées et pour une reconnaissance d'archivage de données de plusieurs dispositifs (ID, OD) dans l'unité USB (UE), une gestion de mémoire et un contrôle d'accès à la mémoire sont prévus, lesquels mémorisent les données déposées dans la mémoire de données avec un identificateur, un indicateur et une date.
